# EUROPEAN PATENT APPLICATION

(11) **EP 4 492 829 A1**
(43) Date of publication of application: **15.01.2025**
(21) Application number: 23765956.0
(22) Date of filing: 06.03.2023
(51) Int. Cl.: H04W 4/02, H04W 4/029

(54) **MODEL ACCURACY DETERMINATION METHOD AND APPARATUS, AND NETWORK SIDE DEVICE**

(30) Priority: 07.03.2022 CN 202210224396
(71) Applicant: VIVO MOBILE COMMUNICATION CO., LTD., Dongguan, Guangdong 523863 (CN)
(72) Inventor: CHONG, Weiwei, Dongguan, Guangdong 523863 (CN); CHENG, Sihan, Dongguan, Guangdong 523863 (CN); WU, Xiaobo, Dongguan, Guangdong 523863 (CN)
(74) Representative: Lavoix
(86) International application number: PCT/CN2023/079920
(87) International publication number: WO 2023/169378

(57) **Abstract**

This application discloses a model accuracy determining method and apparatus, and a network-side device, and pertains to the field of mobile communication. A model accuracy determining method in an embodiment of this application includes: performing, by a first network element, inference for a task based on a first model; determining, by the first network element, first accuracy corresponding to the first model, where the first accuracy is used to indicate accuracy of an inference result of the task obtained by the first model; and in a case that the first accuracy meets a preset condition, sending, by the first network element, first information to a second network element, where the first information is used to indicate that accuracy of the first model does not meet an accuracy requirement or has decreased; where the second network element is a network element that triggers the task.

## Description

### CROSS-REFERENCE TO RELATED APPLICATIONS

This application claims priority to Chinese Patent Application No. 202210224396.2, filed with the China National Intellectual Property Administration on March 7, 2022 and titled " MODEL ACCURACY DETERMINING METHOD AND APPARATUS, AND NETWORK-SIDE DEVICE", which is incorporated herein by reference in its entirety.

### TECHNICAL FIELD

This application pertains to the field of mobile communication technologies, and specifically relates to a model accuracy determining method and apparatus, and a network-side device.

### BACKGROUND

In a communication network, some network elements have been introduced for performing intelligent data analysis and generating data analytics results (analytics) (also known as inference data results) of some tasks, where the data analytics results can assist intra- and inter-network devices in making policy decisions. The purpose is to use artificial intelligence (Artificial Intelligence, AI) methods to improve intelligence of devices in making policy decisions.

The network data analytics function (Network Data Analytics Function, NWDAF) can train AI or machine learning (Machine Learning, ML) models based on training data to obtain a model suitable for a specific AI task. Based on AI/ML models, inference is performed for inference input data of an AI task to obtain inference result data corresponding to the AI task. The policy control function (Policy Control Function, PCF) entity performs intelligent policy control and charging (Policy Control and Charging, PCC) based on the inference result data, for example, formulating intelligent user residency policies based on inference result data of user service behavior to enhance user service experience. Alternatively, the access and mobility management function (Access and Mobility Management Function, AMF) performs intelligent mobility management operations based on inference result data of an AI task, for example, intelligently paging a user based on inference result data of user movement trajectory to improve the paging success rate.

The intra- and inter-network devices make correct and optimized policy decisions based on AI data analytics results, but this requires accurate data analytics results as a basis. If the accuracy of the data analytics results is relatively low and incorrect information is provided to the intra- and inter-network devices for reference, the devices will eventually make incorrect policy decisions or perform inappropriate operations. Therefore, it is essential to ensure the accuracy of the data analytics results.

Although accuracy in training (Accuracy in Training, AiT) of the model meets the accuracy requirement of the model, it is uncertain whether accuracy in use (Accuracy in Use, AiU) of the model can also meet the accuracy requirement. Gaps may exist due to different data distributions, insufficient generalization capability of the model, or other reasons, leading to less accurate inference result data obtained by the model. When such data is provided as a reference to the intra- and inter-network devices, the intra- and inter-network devices are likely to make incorrect policy decisions or perform inappropriate operations.

### SUMMARY

Embodiments of this application provide a model accuracy determining method and apparatus, and a network-side device, so as to solve the problem of relatively low accuracy of inference result data obtained by the model.

According to a first aspect, a model accuracy determining method is provided, applied to a first network element. The method includes:
performing, by the first network element, inference for a task based on a first model;
determining, by the first network element, first accuracy corresponding to the first model, where the first accuracy is used to indicate accuracy of an inference result of the task obtained by the first model; and
in a case that the first accuracy meets a preset condition, sending, by the first network element, first information to a second network element, where the first information is used to indicate that accuracy of the first model does not meet an accuracy requirement or has decreased; where
the second network element is a network element that triggers the task.

According to a second aspect, a model accuracy determining apparatus is provided, including:
an inference module configured to perform inference for a task based on a first model;
a calculation module configured to determine first accuracy corresponding to the first model, where the first accuracy is used to indicate accuracy of an inference result of the task obtained by the first model; and
a transmission module configured to: in a case that the first accuracy meets a preset condition, send first information to a second network element, where the first information is used to indicate that accuracy of the first model does not meet an accuracy requirement or has decreased; where
the second network element is a network element that triggers the task.

According to a third aspect, a model accuracy determining method is provided, applied to a second network element. The method includes:
sending, by a second network element, a task request message to a first network element, where the task request message is used to request to perform inference for a task; and
receiving, by the second network element, first information from the first network element, where the first information is used to indicate that accuracy of a first model does not meet an accuracy requirement or has decreased; where
the first model is a model used for performing inference for the task, and that the accuracy of the first model does not meet the accuracy requirement or has decreased is determined by the first network element.

According to a fourth aspect, a model accuracy determining apparatus is provided, including:
a sending module configured to send a task request message to a first network element, where the task request message is used to request to perform inference for a task; and
a receiving module configured to receive first information from the first network element, where the first information is used to indicate that accuracy of a first model does not meet an accuracy requirement or has decreased; where
the first model is a model used for performing inference for the task, and that the accuracy of the first model does not meet the accuracy requirement or has decreased is determined by the first network element.

According to a fifth aspect, a network-side device is provided, where the network-side device includes a processor and a memory, where the memory stores a program or instructions capable of running on the processor, and when the program or instructions are executed by the processor, the steps of the method according to the first aspect are implemented, or the steps of the method according to the third aspect are implemented.

According to a sixth aspect, a model accuracy determining system is provided, including a network-side device, where the network device includes a first network element and a second network element, the first network element may be used to perform the steps of the model accuracy determining method according to the first aspect, and the second network element may be used to perform the steps of the model accuracy determining method according to the third aspect.

According to a seventh aspect, a readable storage medium is provided, where a program or instructions are stored in the readable storage medium, and when the program or instructions are executed by a processor, the steps of the method according to the first aspect are implemented, or the steps of the method according to the third aspect are implemented.

According to an eighth aspect, a chip is provided, where the chip includes a processor and a communication interface, the communication interface is coupled to the processor, and the processor is configured to run a program or instructions to implement the steps of the method according to the first aspect or the steps of the method according to the third aspect.

According to a ninth aspect, a computer program/program product is provided, where the computer program/program product is stored in a storage medium, and the computer program/program product is executed by at least one processor to implement the steps of the model accuracy determining method according to the first aspect, or the steps of the model accuracy determining method according to the third aspect.

In the embodiments of this application, the first network element performs inference for a task based on a first model, determines first accuracy corresponding to the first model, and in a case that the first accuracy meets a preset condition, sends first information to the second network element, where the first information is used to indicate that accuracy of the first model does not meet an accuracy requirement or has decreased. In this way, accuracy in use of the model can be monitored, and corresponding measures can be taken in a timely manner when the accuracy decreases, thereby preventing incorrect policy decisions or inappropriate operations.

### BRIEF DESCRIPTION OF DRAWINGS

FIG. 1 is a schematic structural diagram of a wireless communication system to which an embodiment of this application is applicable;
FIG. 2 is a schematic flowchart of a model accuracy determining method according to an embodiment of this application;
FIG. 3 is another schematic flowchart of a model accuracy determining method according to an embodiment of this application;
FIG. 4 is another schematic flowchart of a model accuracy determining method according to an embodiment of this application;
FIG. 5 is a schematic structural diagram of a model accuracy determining apparatus according to an embodiment of this application;
FIG. 6 is another schematic flowchart of a model accuracy determining method according to an embodiment of this application;
FIG. 7 is another schematic structural diagram of a model accuracy determining apparatus according to an embodiment of this application;
FIG. 8 is a schematic structural diagram of a communication device according to an embodiment of this application; and
FIG. 9 is a schematic structural diagram of a network-side device for implementing an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. The following description describes a 5G system for illustrative purposes and uses 5G terminology in most of the following description, but these technologies can also be applied to applications beyond 5G systems, such as the 6th generation (6^{th} Generation, 6G) communication system.

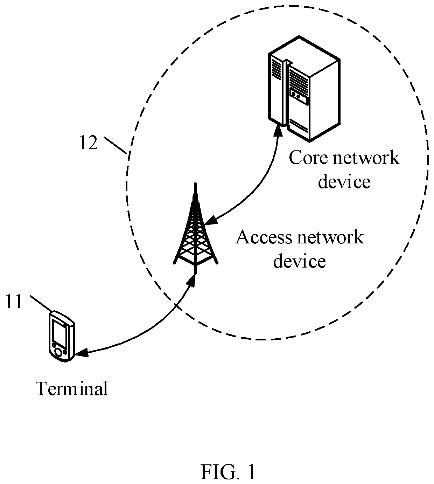

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, a smart earphone, smart glasses, smart jewelry (a smart bracelet, a smart hand chain, a smart ring, a smart necklace, a smart leglet, a smart anklet, and the like), a smart wristband, smart clothing, or the like. It should be noted that the terminal 11 is not limited to a specific type in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or other suitable terms in the field. Provided that the same technical effect is achieved, the base station is not limited to specific technical terms. It should be noted that in the embodiments of this application, only the base station in a 5G system is taken as an example for description, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (EdgeApplicationServerDiscoveryFunction, EASDF), a unified data management (Unified Data Management, UDM) entity, a unified data repository (Unified Data Repository, UDR), a home subscriber server (Home Subscriber Server, HSS), a centralized network configuration (Centralized network configuration, CNC), a network repository function (Network Repository Function, NRF), a network exposure function (NetworkExposureFunction, NEF), a local NEF (LocalNEF, or L-NEF), a binding support function (Binding Support Function, BSF), an application function (Application Function, AF), and the like. It should be noted that in the embodiments of this application, only the core network device in the 5G system is used as an example for description, but the core network device is not limited to a specific type.

The following describes in detail a model accuracy determining method and apparatus, and a network-side device provided in the embodiments of this application by using some embodiments and application scenarios with reference to the accompanying drawings.

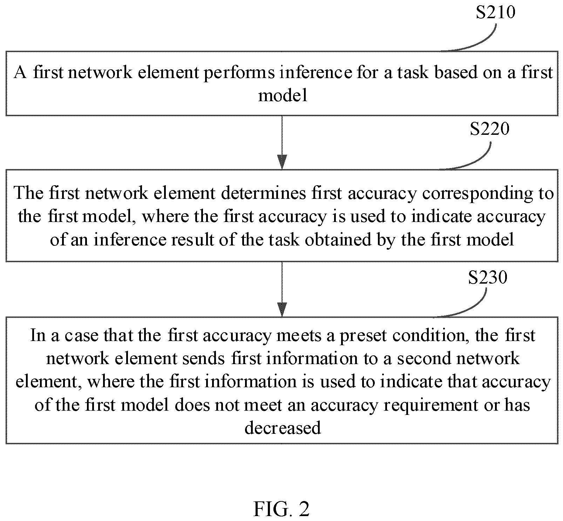

As shown in FIG. 2, an embodiment of this application provides a model accuracy determining method. The method is executed by a first network element, where the first network element includes a model inference function network element. In other words, the method can be executed by software or hardware installed in the first network element. The method includes the following steps.

S210. The first network element performs inference for a task based on a first model.

In an implementation, the first network element may be a network element that has both a model inference function and a model training function. For example, the first network element is an NWDAF, and the NWDAF may include an analytics logical function (Analytics Logical Function, AnLF) and a model training logical function (Model Training Logical Function, MTLF).

In another implementation, the first network element includes a network element having a model inference function, and the third network element includes a model training function network element. For example, the first network element is an AnLF, and the third network element is an MTLF.

If an NWDAF is used as the first network element, the third network element and the first network element in the following embodiments can be a same network element, that is, the MTLF and the AnLF are combined into the NWDAF. However, for simplicity, the following embodiments are described by using an example in which the first network element is an AnLF and the third network element is an MTLF.

It should be understood that the first model may be constructed and trained according to an actual need, for example, an AI/ML model. The MTLF collects training data and performs model training based on the training data. After the training is completed, the MTLF sends information of the trained first model to the AnLF.

After determining the triggered task, the AnLF performs inference for the task based on the first model to obtain inference result data.

It should be understood that the task is a data analytics task for indicating a task type other than a single task. After the task is triggered, the AnLF can determine the first model corresponding to the task based on identity information (Analytics ID) of the task, and then perform inference for the task based on the corresponding first model to obtain the inference result data. For example, if the Analytics ID of the task is a UE mobility that is used to predict a movement trajectory of a terminal (also referred to as user equipment (User Equipment, UE)), the AnLF can perform inference for the task based on the first model corresponding to the UE mobility. The obtained inference result data is the predicted terminal location (UE location) information.

The AnLF can perform one or more inferences on the task based on the first model to obtain multiple pieces of inference result data or inference result data including multiple output result values.

It should be understood that the AnLF performing inference for the task may be triggered by a task request message sent by the second network element, where the second network element is a network element that triggers the task, and the second network element includes a consumer network function (consumer Network Function, consumer NF); or the task may be actively triggered by the AnLF, for example, one validation and testing phase is set, and in this validation and testing phase, the task is actively simulated and triggered by the AnLF for testing the accuracy of the first model.

S220. The first network element determines first accuracy corresponding to the first model, where the first accuracy is used to indicate accuracy of an inference result of the task obtained by the first model.

After completing the inference for the task, the AnLF calculates the first accuracy corresponding to the first model during the inference process, where the first accuracy is AiU. The first accuracy can be calculated in various ways, and the embodiments of this application provide only one specific implementation. Step S220 includes:
obtaining, by the first network element, inference result data corresponding to the task based on the first model;
obtaining, by the first network element, label data corresponding to the inference result data, where the label data can be obtained from the source device of the label data; and
calculating, by the first network element, the first accuracy of the first model based on the inference result data and the label data. Specifically, the inference result data can be compared with the corresponding label data to determine the number of correct results in the inference result data, and the number of correct results is divided by the total number as the first accuracy. The formula is expressed as follows:

First accuracy = number of correct results ÷ total number; where
the correct result can indicate that the inference result data is consistent with the label data or that a difference between the inference result data and the label data is within an allowable range.

The first accuracy may be expressed in a variety of forms, not limited to a specific percentage value, such as 90%; or may be expressed in classification form, such as high, medium, or low; or may be normalized data, such as 0.9.

In an implementation, the obtaining, by the first network element, label data corresponding to the inference result data includes:
determining, by the first network element, a source device of the label data corresponding to the task; and
obtaining, by the first network element, the label data from the source device.

The source device of the label data can be determined by the AnLF based on type information of the output data of the first model, constraint condition information and object information of the task, and the like.

S230. In a case that the first accuracy meets a preset condition, the first network element sends first information to a second network element, where the first information is used to indicate that accuracy of the first model does not meet an accuracy requirement or has decreased.

The AnLF determines, based on whether the first accuracy meets the preset condition, whether the accuracy of the first model meets the accuracy requirement or has decreased. The preset condition may include the first accuracy being less than a preset threshold or a degree of decrease having reached a specified extent.

When determining that the accuracy of the first model does not meet the accuracy requirement or has decreased, the AnLF sends the first information to the consumer NF to inform the consumer NF that the accuracy of the first model does not meet the accuracy requirement or has decreased, so that the consumer NF performs a corresponding operation based on the first information. In an implementation, the operation may include at least one of the following:
continuing to use inference result data corresponding to the task;
stopping use of the inference result data corresponding to the task;
re-sending the task request message to the first network element for requesting the first network element to perform inference for the task again; and
re-sending the task request message to a fifth network element for requesting the fifth network element to perform inference for the task, where the fifth network element includes a model inference function network element, that is, another AnLF other than the first network element.

From the technical solutions described in the above embodiments, it can be seen that in the embodiments of this application, the first network element performs inference for a task based on a first model, determines first accuracy corresponding to the first model, and in a case that the first accuracy meets a preset condition, sends first information to the second network element, where the first information is used to indicate that accuracy of the first model does not meet an accuracy requirement or has decreased. In this way, accuracy in use of the model can be monitored, and corresponding measures are taken in a timely manner when the accuracy decreases, thereby preventing incorrect policy decisions or inappropriate operations.

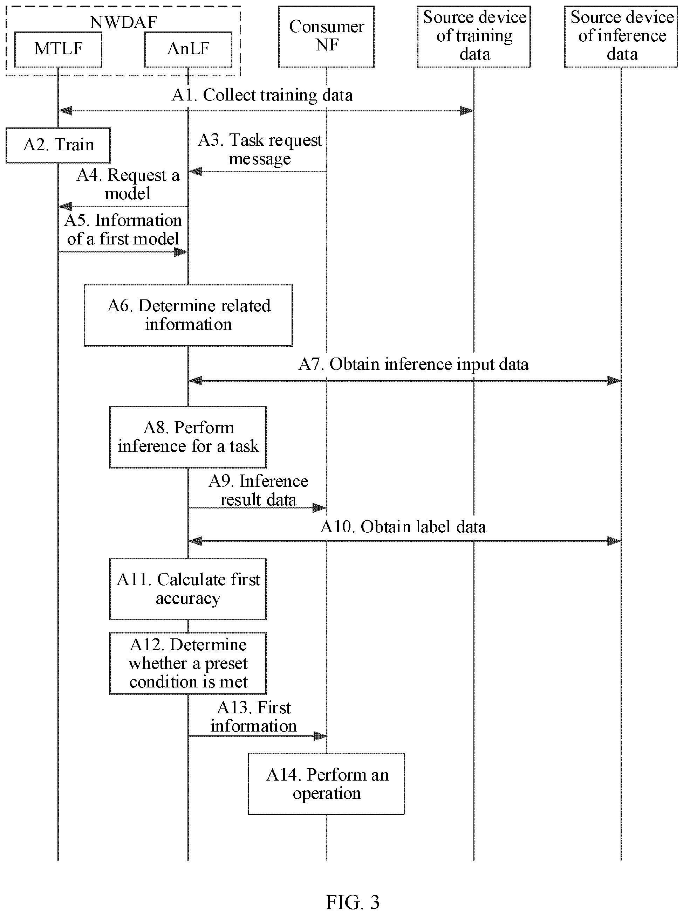

Based on the above embodiments, further, as shown in FIG. 3, before step S210, the method further includes:
obtaining, by the first network element, the first model and second accuracy of the first model, where the second accuracy is used to indicate accuracy of a model output result presented by the first model during a training phase or a testing phase.

As shown in FIG. 3, the process of training the first model by the MTLF includes steps A1 and A2.

Step A1. The MTLF collects training data from a training data source device.

Step A2. The MTLF trains the first model based on the training data.

After completing the training of the first model, the MTLF can perform step A5 of sending information of the trained first model to the AnLF.

In an implementation, a message specifically carrying the information of the first model may be an Nnwdaf_MLModelProvision_Notify or Nnwdaf_MLModelInfo_Response message.

In an implementation, before step A5, the method further includes the following step.

Step A4. The AnLF sends a model request message to the MTLF.

In an implementation, in step A2, during the training phase of the first model or the testing phase after training, the MTLF needs to evaluate the accuracy of the first model and calculate the second accuracy of the first model, that is, AiT. The second accuracy can be obtained using the same calculation formula as the first accuracy. Specifically, the MTLF can set a validation data set to evaluate the second accuracy of the first model, where the validation data set includes input data for the first model and corresponding label data. The MTLF inputs the input data into the trained first model to obtain output data, then compares whether the output data is consistent with the label data, and calculates the second accuracy of the first model according to the above formula.

Correspondingly, in an implementation, the MTLF can also send the second accuracy of the first model when sending the information of the first model to the AnLF in step A5, or send the second accuracy of the first model to the AnLF through a separate message.

In one embodiment, before step S210, the method further includes the following step.

Step A3. The first network element receives a task request message from the second network element, where the task request message is used to request to perform inference for the task, and the task request message contains description information of the task, that is, the consumer NF sends a task request message to the AnLF to trigger the AnLF to perform inference for the task based on the first model corresponding to the task.

The description information of the task can be diverse and may include identity information of the task, constraint condition information (Analytics Filter Information) of the task, object information (Analytics Target) of the task, and the like. Through the description information of the task, the object, range, and the like involved in the task can be determined.

The AnLF requests a model from the MTLF based on the task request message and obtains information of the first model and second accuracy of the first model from the MTLF.

In an implementation, steps A1 to A2 may be after step A4, that is, after receiving the model request message sent by the AnLF, the MTLF trains the first model corresponding to the task and sends the message of the trained first model to the AnLF.

In an implementation, as shown in FIG. 3, step S210 includes the following step.

Step A6. The AnLF determines at least one of the following related information based on the received task request message:
the first model corresponding to the task;
type information of input data of the first model;
type information of output data of the first model;
a source device of the inference input data corresponding to the task; and
a source device of the label data corresponding to the task.

The first model corresponding to the task can be determined based on a task type indicated by the analytics ID in the task request message, so as to determine the first model to be used for the task; or the first model corresponding to the task can be determined based on a mapping relationship between the analytics ID and the first model; where model identity information (model ID) can be used to represent the first model, for example, model 1.

The type information of the input data of the first model can also be referred to as metadata (metadata) information of the model. For example, the input data may include a terminal identity (UE ID), time, a current service status of the terminal, and the like.

The type information of the output data of the first model includes data type (data type), for example, a tracking area (Tracking Area, TA) or a cell (cell) used for indicating a UE location.

For the source device of the inference input data corresponding to the task, specifically, the AnLF can determine, based on information in the task request message such as analytics filter information and analytics target, the object and range involved in the task, and then determine, based on the object, range, and metadata information, a network element capable of obtaining the inference input data corresponding to the task as the source device of the inference input data corresponding to the task.

For the source device of the label data corresponding to the task, specifically, the AnLF can determine, based on the type information of the output data of the first model, a network function type (NF type) capable of providing the output data, then determine, based on the constraint condition information and object information of the task, a specific network element instance (instance) corresponding to the network function type, and use this network element instance as the source device of the label data. For example, based on data type of the output data of the first model corresponding to the task UE mobility = UE location, the AnLF determines that the data of UE location can be provided by the network function type AMF type. Then, based on the constraint condition information of the task AOI and the object UE1 of the task, the AnLF finds, from the unified data management (Unified Data Management, UDM) or the network repository function (Network Repository Function, NRF), that the corresponding AMF instance is AMF 1, so the AnLF uses AMF 1 as the source device of the label data and subsequently obtains the label data of UE location from AMF 1.

The source device of the input data and the source device of the label data may be a same source device or different source devices, or may be a collection of multiple source devices. In FIG. 3, they are all expressed as an inference data source device.

Step A7. The AnLF obtains the inference input data corresponding to the task. Specifically, the AnLF may send an inference input data request message to the source device of the inference input data of the task determined in step A6 to collect the inference input data corresponding to the task.

Step A8. The AnLF performs inference for the inference input data corresponding to the task based on the obtained first model to obtain the inference result data.

For example, the AnLF performs inference for the inference input data corresponding to the task, such as the UE ID, time, and UE current service status, based on the first model corresponding to analytics ID = UE mobility, to obtain the inference result data which is the output data of UE location.

Step A9. The first network element sends the inference result data to the second network element, that is, the AnLF sends the inference result data obtained through inference to the consumer NF.

The inference result data can be used to inform the consumer NF of the statistical or predicted value obtained through inference by the first model corresponding to the analytics ID, for assisting the consumer NF in making a corresponding policy decision. For example, the statistical or predicted value corresponding to UE mobility can be used to assist the AMF in optimizing user paging.

Step A10. The AnLF obtains the label data corresponding to the inference result data.

**In** an implementation, a message specifically carrying the label data may be an Nnf_EventExposure_Subscribe message.

Specifically, the AnLF can send a request message for the label data to the source device of the label data, where the request message includes the type information of the label data, the object information and time information (such as a timestamp or a time period) corresponding to the label data, and the like, and is used to determine, with the source device of the label data, specific label data to be reported.

The type information of the label data, object information and time information corresponding to the label data, and the like in the request message for the label data can be determined by the AnLF based on the type information of output data of the first model, the object information of the task, and the constraint condition information of the task. Specifically, the AnLF determines, based on the type information of the output data of the first model, the type information of the label data that needs to be obtained; the AnLF determines, based on the object information of the task, the object information of the label data that needs to be obtained; and if the AnLF determines, based on the constraint condition information of the task, that the inference process of the task is a statistical calculation for a past time or a prediction for a future time, the AnLF also needs to obtain label data corresponding to the past time or the future time.

For example, the AnLF sends a request message for label data to the AMF or the location management function (Location Management Function, LMF), where the request message carries data type corresponding to the label data = UE location, object information = UE1, and time information = a specified time period, and is used to request the AMF/LMF to report the data of UE location of UE 1 within the specified time period.

It should be understood that if the AnLF obtains multiple pieces of inference result data by performing one or more inference processes in step A8, correspondingly, the AnLF needs to obtain multiple pieces of label data corresponding to the multiple inference result data.

In an implementation, as shown in FIG. 3, step S220 includes the following steps.

Step A11. The AnLF calculates the first accuracy of the first model based on the inference result data and the label data.

Step A12. The AnLF determines whether the first accuracy meets a preset condition, and performs step A13 in a case that the first accuracy meets the AnLF.

The preset condition may be set according to an actual need. In an implementation, the preset condition includes at least one of the following conditions:
the first accuracy is lower than a first threshold;
the first accuracy is lower than second accuracy; and
the first accuracy is lower than the second accuracy, and a difference between the first accuracy and the second accuracy is greater than a second threshold.

In an implementation, as shown in FIG. 3, step S230 includes the following step.

Step A13. The AnLF sends first information to the consumer NF to notify the consumer NF that the accuracy of the first model does not meet the accuracy requirement or has decreased.

In an implementation, the first information may specifically be sent through an Nnwdaf_ AnalyticsSubscription_Notify message.

In an implementation, the first information includes at least one of the following:
part or all of description information of the task, used to indicate the task of performing inference using the first model, specifically including: Analytics ID, Analytics filter information, analytics target, and the like;
indication information indicating that the accuracy of the first model does not meet the accuracy requirement or has decreased;
the first accuracy;
recommended operation information, used to recommend an operation for the consumer NF to perform after the first information is received; and
waiting time information, where the waiting time information is used to indicate a time required for the first network element to resume inference for the task, which may specifically be a waiting time required for the AnLF to obtain the retrained first model and perform inference to obtain inference result data, or a waiting time required for the AnLF to obtain a second model usable for performing the task and perform inference to obtain inference result data.

In an implementation, the recommended operation information includes at least one of the following operations:
continuing to use the inference result data corresponding to the task, that is, indicating that the consumer NF can continue to use the obtained inference result data;
stopping use of the inference result data corresponding to the task, that is, indicating that the consumer NF stops using the obtained inference result data; and
re-triggering the task to obtain new inference result data, that is, indicating that the consumer NF re-sends the task request message.

After receiving the first information, the consumer NF can perform step A14 to perform corresponding operations based on the first information.

Specifically, the consumer NF can perform at least one of the following operations based on the first information:
continuing to use the inference result data corresponding to the task, where this operation can be performed in a case that a decrease of the first accuracy is small and does not exceed a preset decrease threshold, such as a second threshold; and in an implementation, if the inference result data corresponding to the task continues to be used, a weight of the inference result data for policy decision-making can be appropriately reduced;.
stopping use of the inference result data corresponding to the task, where this operation can be performed in a case that the decrease of the first accuracy is large and exceeds the preset decrease threshold;
re-sending the task request message to the first network element for requesting the first network element to perform inference for the task again; and
re-sending the task request message to a fifth network element to request the fifth network element to perform inference for the task, where the fifth network element includes a model inference function network element, that is, the consumer NF can send a task request message to another AnLF.

From the technical solutions described in the above embodiments, it can be seen that in the embodiments of this application, the first network element performs inference for a task based on a first model, determines first accuracy corresponding to the first model, and in a case that the first accuracy meets a preset condition, sends first information to the second network element, where the first information is used to indicate that accuracy of the first model does not meet an accuracy requirement or has decreased. In this way, accuracy in use of the model can be monitored, and, corresponding measures are taken in a timely manner when the accuracy decreases, thereby preventing incorrect policy decisions or inappropriate operations.

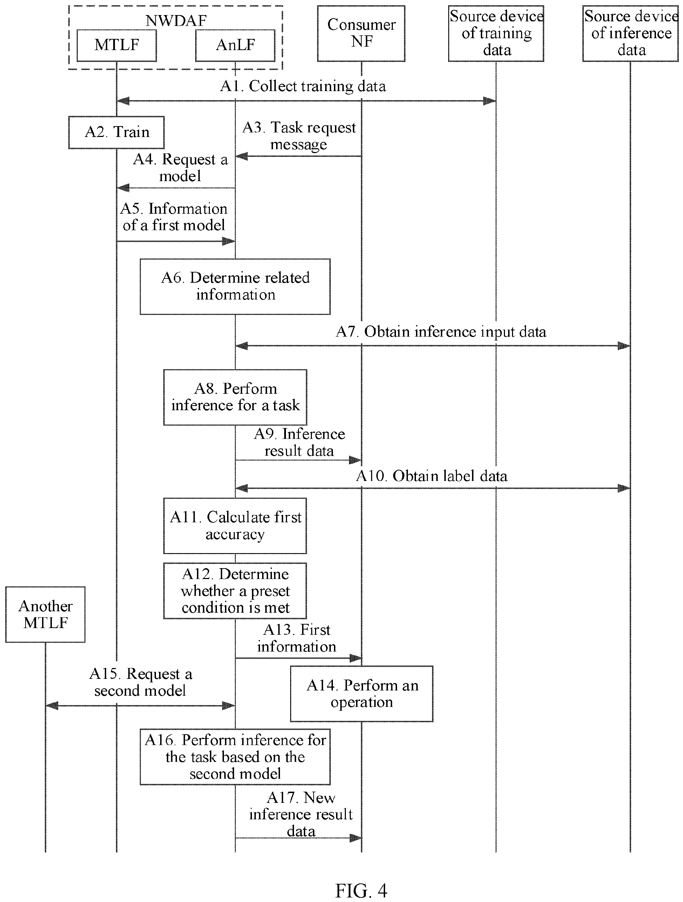

Based on the above embodiments, further, as shown in FIG. 4, in a case that the first accuracy meets the preset condition, the method further includes the following steps.

Step A15. The first network element requests to obtain a second model from a fourth network element, where the second model is a model provided by the fourth network element for the task. For the specific process, reference may be made to steps A4 and A5. The fourth network element includes a model training function network element, that is, the fourth network element may be an MTLF other than the third network element.

Step A16. The first network element performs inference for the task based on the second model to obtain new inference result data of the task. In this case, the task subjected to inference may be a task triggered by the task request message sent by the consumer NF in step A3, or may be a task triggered by a task request message resent by the consumer NF based on the first information in step A14.

Step A17. The AnLF sends the new inference result data to the consumer NF.

From the technical solutions of the above embodiments, it can be seen that in the embodiments of this application, in a case that the first accuracy meets the preset condition, the first network element obtains the second model from the fourth network element and performs inference for the task to obtain the new inference result data. In this way, when the accuracy of the model decreases, timely measures can be taken for adjustment to quickly restore the task inference accuracy, thereby preventing incorrect policy decisions or inappropriate operations.

Based on the above embodiments, further, in a case that the first accuracy does not meet the accuracy requirement, the method further includes:
sending, by the first network element, second information to a third network element that provides the first model, where the second information is used to indicate that the accuracy of the first model does not meet the accuracy requirement or has decreased, that is, the AnLF informs, through the second information, the MTLF providing the first model that the accuracy of the first model does not meet the accuracy requirement or has decreased.

In an implementation, the second information includes at least one of the following:
identity information of the first model, such as Model 1;
identity information of the task, such as Analytics ID;
constraint condition information of the task, which is used to indicate a range involved in the second information, that is, an object and a range of the task involved when the accuracy of the first model does not meet the accuracy requirement or decreases, including: a time range, an area range, an object range, and the like;
indication information indicating that the accuracy of the first model does not meet the accuracy requirement or has decreased;
the first accuracy;
request indication information for retraining the first model, which is used to indicate the MTLF to retrain the first model; and
first data of the task, where the first data is used to retain the first model, where in an implementation, the AnLF can store the first data in a specified network element, such as the analytics data repository function (Analytics Data Repository Function, ADRF), and indicate, in the second information, identity information of the ADRF, and the MTLF obtains the first data from the ADRF.

In an implementation, the first data includes at least one of the following:
inference input data corresponding to the task;
inference result data corresponding to the task; and
label data corresponding to the task.

In an implementation, the MTLF can enter a retraining process of the first model based on the first information. The specific retaining process is substantially the same as the training process in step A2, except that the training data can include the first data of the task.

In one embodiment, after the MTLF completes the retraining of the first model, the method further includes:
receiving, by the first network element, third information from the third network element, where the third information includes information of the retrained first model, that is, the MTLF sends the information of the retrained first model to the AnLF so that the AnLF resumes inference for the task.

In an implementation, the third information further includes at least one of the following:
applicable condition information of the retrained first model, where the applicable condition information may include a time range, an area range, an object range, and the like specific to the first model; and
third accuracy of the retrained first model, that is, AiT of the retrained first model, where the third accuracy is used to indicate accuracy of a model output result presented by the retrained first model during a training phase or a testing phase.

From the technical solutions described in the above embodiments, it can be seen in the embodiments of this application that in a case that the first accuracy meets the preset condition, the first network element sends the second information to the third network element to indicate that the accuracy of the first model does not meet the accuracy requirement or has decreased, so that the third network element retrains the first model and sends the information of the retrained first model to the first network element. In this way, when the accuracy of the model decreases, timely measures can be taken for adjustment to quickly restore the accuracy of inference for the task, thereby preventing incorrect policy decisions or inappropriate operations.

The model accuracy determining method provided in the embodiments of this application can be executed by a model accuracy determining apparatus. In the embodiments of this application, the model accuracy determining method being executed by a model accuracy determining apparatus is used as an example to illustrate a model accuracy determining apparatus provided in the embodiments of this application.

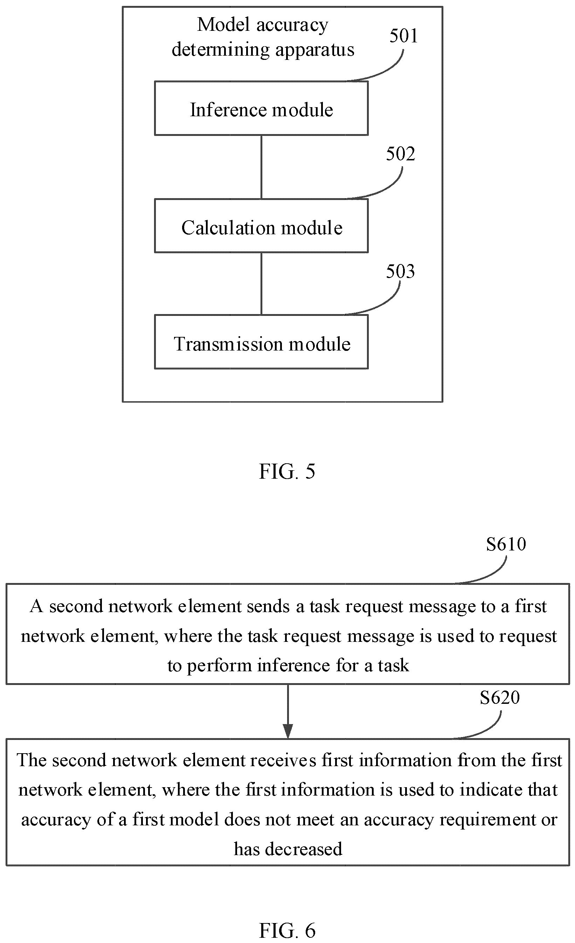

As shown in FIG. 5, the model accuracy determining apparatus includes an inference module 501, a calculation module 502, and a transmission module 503.

The inference module 501 is configured to perform inference for a task based on a first model; the calculation module 502 is configured to determine first accuracy corresponding to the first model, where the first accuracy is used to indicate accuracy of an inference result of the task obtained by the first model; and the transmission module 503 is configured to, in a case that the first accuracy meets a preset condition, send first information to a second network element, where the first information is used to indicate that accuracy of the first model does not meet an accuracy requirement or has decreased; where the second network element is a network element that triggers the task.

Further, the model accuracy determining apparatus includes a model inference function network element.

Further, the second network element includes a consumer network function.

Further, the calculation module 502 is configured to perform:
obtaining inference result data corresponding to the task based on the first model;
obtaining label data corresponding to the inference result data; and
calculating the first accuracy of the first model based on the inference result data and the label data.

Further, the calculation module 502 is configured to perform:
determining a source device of the label data corresponding to the task; and
obtaining the label data from the source device.

From the technical solutions described in the above embodiments, it can be seen in the embodiments of this application that inference is performed for a task based on a first model, first accuracy corresponding to the first model is determined, and in a case that the first accuracy meets a preset condition, first information is sent to the second network element, where the first information is used to indicate that accuracy of the first model does not meet an accuracy requirement or has decreased. In this way, accuracy in use of the model can be monitored, and corresponding measures are taken in a timely manner when the accuracy decreases, thereby preventing incorrect policy decisions or inappropriate operations.

Based on the above embodiments, further, the first information includes at least one of the following:
part or all of description information of the task;
indication information indicating that the accuracy of the first model does not meet the accuracy requirement or has decreased;
the first accuracy;
recommended operation information; and
waiting time information, where the waiting time information is used to indicate a time required to resume inference for the task.

Further, the recommended operation information includes at least one of the following operations:
continuing to use inference result data corresponding to the task;
stopping use of the inference result data corresponding to the task; and
re-triggering the task to obtain new inference result data.

Further, before inference is performed for the task based on the first model, the transmission module is further configured to receive a task request message from the second network element, where the task request message is used to request to perform inference for the task, and the task request message contains description information of the task.

Further, after the inference result data of the task is obtained based on the first model, the transmission module is further configured to send the inference result data to the second network element.

Further, the preset condition includes at least one of the following conditions:
the first accuracy is lower than a first threshold;
the first accuracy is lower than second accuracy; and
the first accuracy is lower than the second accuracy, and a difference between the first accuracy and the second accuracy is greater than a second threshold; where
the second accuracy is used to indicate accuracy of a model output result presented by the first model during a training phase or a testing phase.

Further, before inference is performed for the task based on the first model, the transmission module is further configured to obtain the first model and the second accuracy of the first model.

From the technical solutions described in the above embodiments, it can be seen in the embodiments of this application that inference is performed for a task based on a first model, first accuracy corresponding to the first model is determined, and in a case that the first accuracy meets a preset condition, first information is sent to the second network element, where the first information is used to indicate that accuracy of the first model does not meet an accuracy requirement or has decreased. In this way, accuracy in use of the model can be monitored, and corresponding measures are taken in a timely manner when the accuracy decreases, thereby preventing incorrect policy decisions or inappropriate operations.

Based on the above embodiments, further, in a case that the first accuracy meets the preset condition, the transmission module is further configured to request to obtain a second model from a fourth network element, where the second model is a model provided by the fourth network element for the task; and
the inference module is further configured to perform, for the first network element, inference for the task based on the second model to obtain new inference result data of the task.

Further, the fourth network element includes a model training function network element.

From the technical solutions of the above embodiments, it can be seen that in the embodiments of this application, in a case that the first accuracy meets a preset condition, the second model is obtained from the fourth network element and inference is performed for the task to obtain new inference result data. In this way, when the accuracy of the model decreases, timely measures can be taken for adjustment to quickly restore the task inference accuracy, thereby preventing incorrect policy decisions or inappropriate operations.

Based on the above embodiments, further, in a case that the first accuracy does not meet the accuracy requirement, the transmission module is further configured to send second information to a third network element that provides the first model, where the second information is used to indicate that the accuracy of the first model does not meet the accuracy requirement or has decreased.

Further, the second information includes at least one of the following:
identity information of the first model;
identity information of the task;
constraint condition information of the task;
indication information indicating that the accuracy of the first model does not meet the accuracy requirement or has decreased;
the first accuracy;
request indication information for retraining the first model; and first data of the task, where the first data is used to retrain the first model.

Further, the first data includes at least one of the following:
inference input data corresponding to the task;
inference result data corresponding to the task; and
label data corresponding to the task.

Further, after sending the second information to the third network element, the transmission module is further configured to receive third information from the third network element, where the third information includes information of the retrained first model.

Further, the third information further includes at least one of the following:
applicable condition information of the retrained first model; and
third accuracy of the retrained first model, where the third accuracy is used to indicate accuracy of a model output result presented by the retrained first model during a training phase or a testing phase.

Further, the third network element includes a model training function network element.

From the technical solutions described in the above embodiments, it can be seen in the embodiments of this application that in a case that the first accuracy meets the preset condition, the first network element sends the second information to the third network element to indicate that the accuracy of the first model does not meet the accuracy requirement or has decreased, so that the third network element retrains the first model and sends the information of the retrained first model to the first network element. In this way, when the accuracy of the model decreases, timely measures can be taken for adjustment to quickly restore the accuracy of inference for the task, thereby preventing incorrect policy decisions or inappropriate operations.

The model accuracy determining apparatus in the embodiment of this application may be an electronic device, such as an electronic device having an operating system, or may be a component in an electronic device, such as an integrated circuit or a chip. The electronic device may be a terminal or another device different from the terminal. For example, the terminal may include but is not limited to the types of the terminal 11 listed above, and the another device may be a server, a network attached storage (Network Attached Storage, NAS), or the like, which are not specifically limited in the embodiments of this application.

The model accuracy determining apparatus provided in the embodiments of this application can implement various processes implemented by the method embodiments shown in FIGs. 2 to 4, with the same technical effects achieved. To avoid repetition, details are not described herein again.

As shown in FIG. 6, an embodiment of this application further provides another model accuracy determining method. The method is executed by a second network element, where the second network element includes a consumer network function. In other words, the method can be executed by software or hardware installed in the second network element. The method includes the following steps.

S610. The second network element sends a task request message to a first network element, where the task request message is used to request to perform inference for a task.

S620. The second network element receives first information from the first network element, where the first information is used to indicate that accuracy of a first model does not meet an accuracy requirement or has decreased; where
the first model is a model used for performing inference for the task, and that the accuracy of the first model does not meet the accuracy requirement or has decreased is determined by the first network element.

Further, the first network element includes a model inference function network element.

Further, the second network element includes a consumer network function.

Steps S610 and S620 can implement the method embodiment shown in FIG. 2, with the same technical effects achieved. Repeated content is not described herein again.

From the technical solutions described in the above embodiments, it can be seen in the embodiments of this application that the second network element sends a task request message to the first network element, where the task request message is used to request to perform inference for a task; and the second network element receives first information from the first network element, where the first information is used to indicate that accuracy of a first model does not meet an accuracy requirement or has decreased. In this way, accuracy in use of the model can be monitored, and corresponding measures can be taken in a timely manner when the accuracy decreases, thereby preventing incorrect policy decisions or inappropriate operations.

Based on the above embodiments, further, after the receiving first information from the first network element, the method further includes:
performing, by the second network element, at least one of the following operations based on the first information:
continuing to use inference result data corresponding to the task;
stopping use of the inference result data corresponding to the task;
re-sending the task request message to the first network element for requesting the first network element to perform inference for the task again; and
re-sending the task request message to a fifth network element for requesting the fifth network element to perform inference for the task.

Further, the first information includes at least one of the following:
part or all of description information of the task;
indication information indicating that the accuracy of the first model does not meet the accuracy requirement or has decreased;
first accuracy, where the first accuracy is used to indicate accuracy of an inference result of the task obtained by the first model;
recommended operation information; and
waiting time information, where the waiting time information is used to indicate a time required for the first network element to resume inference for the task.

Further, the recommended operation information includes at least one of the following operations:
continuing to use inference result data corresponding to the task;
stopping use of the inference result data corresponding to the task; and
re-triggering the task to obtain new inference result data.

Further, after the sending a task request message to a first network element, the method further includes:
receiving, by the second network element from the first network element, inference result data corresponding to the task.

Further, the fifth network element includes a model inference function network element.

This embodiment of this application can implement the method embodiment shown in FIG. 3, with the same technical effects achieved. Repeated content is not described herein again.

From the technical solutions described in the above embodiments, it can be seen that in the embodiments of this application, the second network element receives first information from the first network element, where the first information is used to indicate that accuracy of a first model does not meet an accuracy requirement or has decreased, and an operation is performed based on the first information. In this way, accuracy in use of the model can be monitored, and corresponding measures can be taken in a timely manner when the accuracy decreases, thereby preventing incorrect policy decisions or inappropriate operations.

The model accuracy determining method provided in the embodiments of this application can be executed by a model accuracy determining apparatus. In the embodiments of this application, the model accuracy determining method being executed by a model accuracy determining apparatus is used as an example to illustrate a model accuracy determining apparatus provided in the embodiments of this application.

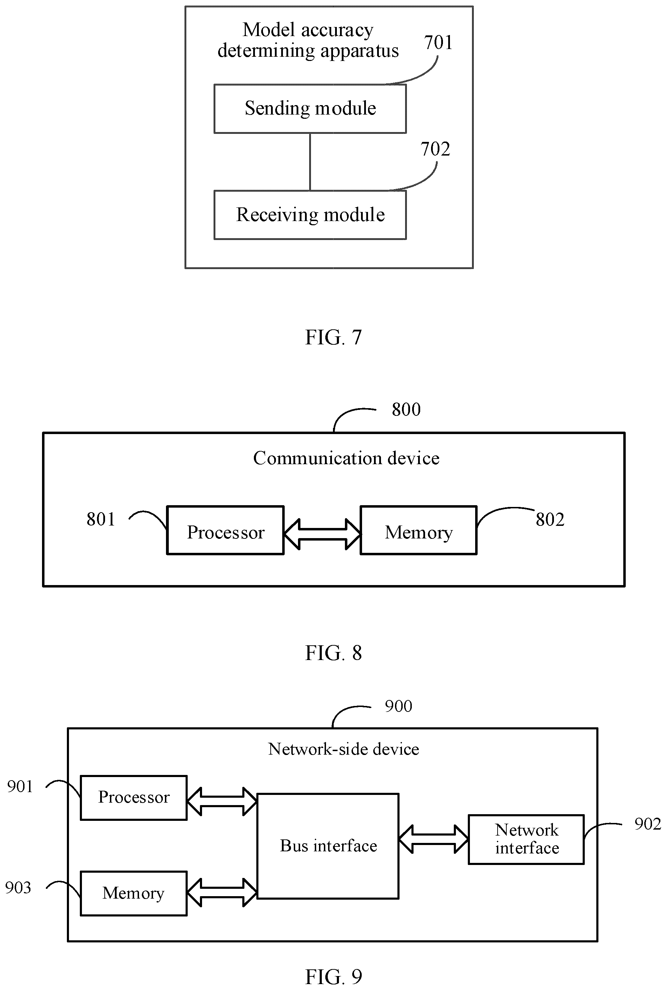

As shown in FIG. 7, the model accuracy determining apparatus includes a sending module 701 and a receiving module 702.

The sending module 701 is configured to send a task request message to a first network element, where the task request message is used to request to perform inference for a task; and the receiving module 702 is configured to receive first information from the first network element, where the first information is used to indicate that accuracy of a first model does not meet an accuracy requirement or has decreased; where
the first model is a model used for performing inference for the task, and that the accuracy of the first model does not meet the accuracy requirement or has decreased is determined by the first network element.

Further, the first network element includes a model inference function network element.

Further, the model accuracy determining apparatus includes a consumer network function.

From the technical solutions described in the above embodiments, it can be seen in the embodiment of this application that a task request message is sent to the first network element, where the task request message is used to request to perform inference for a task; and first information is received from the first network element, where the first information is used to indicate that accuracy of a first model does not meet an accuracy requirement or has decreased. In this way, accuracy in use of the model can be monitored, and corresponding measures can be taken in a timely manner when the accuracy decreases, thereby preventing incorrect policy decisions or inappropriate operations.

Based on the above embodiments, further, after receiving the first information from the first network element, the receiving module is further configured to perform at least one of the following operations based on the first information:
continuing to use inference result data corresponding to the task;
stopping use of the inference result data corresponding to the task;
re-sending the task request message to the first network element for requesting the first network element to perform inference for the task again; and
re-sending the task request message to a fifth network element for requesting the fifth network element to perform inference for the task.

Further, the first information includes at least one of the following:
part or all of description information of the task;
indication information indicating that the accuracy of the first model does not meet the accuracy requirement or has decreased;
first accuracy, where the first accuracy is used to indicate accuracy of an inference result of the task obtained by the first model;
recommended operation information; and
waiting time information, where the waiting time information is used to indicate a time required for the first network element to resume inference for the task.

Further, the recommended operation information includes at least one of the following operations:
continuing to use inference result data corresponding to the task;
stopping use of the inference result data corresponding to the task; and
re-triggering the task to obtain new inference result data.

Further, after the task request message is sent to the first network element, the receiving module is further configured to receive, from the first network element, the inference result data corresponding to the task.

Further, the fifth network element includes a model inference function network element.

From the technical solutions described in the above embodiments, it can be seen that in the embodiments of this application, first information is received from the first network element, where the first information is used to indicate that accuracy of a first model does not meet an accuracy requirement or has decreased, and an operation is performed based on the first information. In this way, accuracy in use of the model can be monitored, and corresponding measures can be taken in a timely manner when the accuracy decreases, thereby preventing incorrect policy decisions or inappropriate operations.

The model accuracy determining apparatus in the embodiment of this application may be an electronic device, such as an electronic device having an operating system, or may be a component in an electronic device, such as an integrated circuit or a chip. The electronic device may be a terminal or another device different from the terminal. For example, the terminal may include but is not limited to the types of the terminal 11 listed above, and the another device may be a server, a network attached storage (Network Attached Storage, NAS), or the like, which are not specifically limited in the embodiments of this application.

The model accuracy determining apparatus provided in the embodiment of this application can implement various processes implemented by the method embodiment shown in FIG. 6, with the same technical effects achieved. To avoid repetition, details are not described herein again.

Optionally, as shown in FIG. 8, an embodiment of this application further provides a communication device 800 including a processor 801 and a memory 802, where the memory 802 stores a program or instructions capable of running on the processor 801. For example, in a case that the communication device 800 is a terminal, when the program or instructions are executed by the processor 801, the steps of the above model accuracy determining method embodiments are implemented, with the same technical effects achieved. In a case that the communication device 800 is a network-side device, when the program or instructions are executed by the processor 801, the steps of the above model accuracy determining method embodiments are implemented, with the same technical effects achieved. To avoid repetition, details are not described herein again.

Specifically, an embodiment of this application further provides a network-side device. As shown in FIG. 9, the network-side device 900 includes: a processor 901, a network interface 902, and a memory 903. The network interface 902 is, for example, a common public radio interface (Common Public Radio Interface, CPRI).

Specifically, the network-side device 900 in this embodiment of the present invention further includes: instructions or a program stored in the memory 903 and capable of running on the processor 901. The processor 901 invokes the instructions or program in the memory 903 to execute the method executed by the modules shown in FIG. 5 and FIG. 7, with the same technical effects achieved. To avoid repetition, details are not described herein again.

An embodiment of this application further provides a readable storage medium, where a program or instructions are stored on the readable storage medium. When the program or instructions are executed by a processor, the steps of the above model accuracy determining method embodiments are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement various processes of the above model accuracy determining method embodiments, with the same technical effects achieved. To avoid repetition, details are not described herein again.

It should be understood that the chip in the embodiment of this application may also be referred to as a system-level chip, a system chip, a chip system, a system on chip, or the like.

An embodiment of this application further provides a computer program/program product, where the computer program/program product is stored in a storage medium, and the computer program/program product is executed by at least one processor to implement various processes of the above model accuracy determining method embodiments, with the same technical effects achieved. To avoid repetition, details are not described herein again.

An embodiment of this application further provides a model accuracy determining system, including: a network-side device, where the network-side device includes a first network element and a second network element. The first network element can be configured to perform the steps of the model accuracy determining method as described above, and the second network element can be configured to perform the steps of the model accuracy determining method as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing embodiments, persons skilled in the art can clearly understand that the method in the foregoing embodiments may be implemented by software in addition to a necessary universal hardware platform or by hardware only. In most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A model accuracy determining method, comprising:
performing, by a first network element, inference for a task based on a first model;
determining, by the first network element, first accuracy corresponding to the first model, wherein the first accuracy is used to indicate accuracy of an inference result of the task obtained by the first model; and
in a case that the first accuracy meets a preset condition, sending, by the first network element, first information to a second network element, wherein the first information is used to indicate that accuracy of the first model does not meet an accuracy requirement or has decreased; wherein
the second network element is a network element that triggers the task.

2. The method according to claim 1, wherein the determining, by the first network element, first accuracy corresponding to the first model comprises:
obtaining, by the first network element, inference result data corresponding to the task based on the first model;
obtaining, by the first network element, label data corresponding to the inference result data; and
calculating, by the first network element, the first accuracy of the first model based on the inference result data and the label data.

3. The method according to claim 1, wherein the first information comprises at least one of the following:
part or all of description information of the task;
indication information indicating that accuracy of the first model does not meet an accuracy requirement or has decreased;
the first accuracy;
recommended operation information; and
waiting time information, wherein the waiting time information is used to indicate a time required for the first network element to resume inference for the task.

4. The method according to claim 3, wherein the recommended operation information comprises at least one of the following operations:
continuing to use inference result data corresponding to the task;
stopping use of the inference result data corresponding to the task; and
re-triggering the task to obtain new inference result data.

5. The method according to claim 1, wherein before the performing inference for a task based on a first model, the method further comprises:
receiving, by the first network element, a task request message from the second network element, wherein the task request message is used to request to perform inference for the task, and the task request message contains description information of the task.

6. The method according to claim 2, wherein the obtaining, by the first network element, label data corresponding to the inference result data comprises:
determining, by the first network element, a source device of the label data corresponding to the task; and
obtaining, by the first network element, the label data from the source device.

7. The method according to claim 2, wherein after the obtaining inference result data corresponding to the task based on the first model, the method further comprises:
sending, by the first network element, the inference result data to the second network element.

8. The method according to claim 1, wherein the preset condition comprises at least one of the following conditions:
the first accuracy is lower than a first threshold;
the first accuracy is lower than second accuracy; and
the first accuracy is lower than the second accuracy, and a difference between the first accuracy and the second accuracy is greater than a second threshold; wherein
the second accuracy is used to indicate accuracy of a model output result presented by the first model during a training phase or a testing phase.

9. The method according to claim 1 or 8, wherein before the performing inference for a task based on a first model, the method further comprises:
obtaining, by the first network element, the first model and the second accuracy of the first model.

10. The method according to claim 1, wherein in a case that the first accuracy meets the preset condition, the method further comprises:
requesting, by the first network element, to obtain a second model from a fourth network element, wherein the second model is a model provided by the fourth network element for the task; and
performing, by the first network element, inference for the task based on the second model to obtain new inference result data of the task.

11. The method according to claim 1, wherein in a case that the first accuracy does not meet the accuracy requirement, the method further comprises:
sending, by the first network element, second information to a third network element that provides the first model, wherein the second information is used to indicate that the accuracy of the first model does not meet the accuracy requirement or has decreased.

12. The method according to claim 11, wherein the second information comprises at least one of the following:
identity information of the first model;
identity information of the task;
constraint condition information of the task;
indication information indicating that the accuracy of the first model does not meet the accuracy requirement or has decreased;
the first accuracy;
request indication information for retraining the first model; and
first data of the task, wherein the first data is used to retrain the first model.

13. The method according to claim 12, wherein the first data comprises at least one of the following:
inference input data corresponding to the task;
inference result data corresponding to the task; and
label data corresponding to the task.

14. The method according to claim 11, wherein after the sending second information to a third network element, the method further comprises:
receiving, by the first network element, third information from the third network element, wherein the third information comprises information of the retrained first model.

15. The method according to claim 14, wherein the third information further comprises at least one of the following:
applicable condition information of the retrained first model; and
third accuracy of the retrained first model, wherein the third accuracy is used to indicate accuracy of a model output result presented by the retrained first model during a training phase or a testing phase.

16. The method according to claim 1, wherein the first network element comprises a model inference function network element.

17. The method according to claim 1, wherein the second network element comprises a consumer network function.

18. The method according to claim 11, wherein the third network element comprises a model training function network element.

19. The method according to claim 10, wherein the fourth network element comprises a model training function network element.

20. A model accuracy determining apparatus, comprising:
an inference module configured to perform inference for a task based on a first model;
a calculation module configured to determine first accuracy corresponding to the first model, wherein the first accuracy is used to indicate accuracy of an inference result of the task obtained by the first model; and
a transmission module configured to: in a case that the first accuracy meets a preset condition, send first information to a second network element, wherein the first information is used to indicate that accuracy of the first model does not meet an accuracy requirement or has decreased; wherein
the second network element is a network element that triggers the task.

21. A model accuracy determining method, comprising:
sending, by a second network element, a task request message to a first network element, wherein the task request message is used to request to perform inference for a task; and
receiving, by the second network element, first information from the first network element, wherein the first information is used to indicate that accuracy of a first model does not meet an accuracy requirement or has decreased; wherein
the first model is a model used for performing inference for the task, and that the accuracy of the first model does not meet the accuracy requirement or has decreased is determined by the first network element.

22. The method according to claim 21, wherein after the receiving first information from the first network element, the method further comprises:
performing, by the second network element, at least one of the following operations based on the first information:
continuing to use inference result data corresponding to the task;
stopping use of the inference result data corresponding to the task;
re-sending the task request message to the first network element for requesting the first network element to perform inference for the task again; and
re-sending the task request message to a fifth network element for requesting the fifth network element to perform inference for the task.

23. The method according to claim 21, wherein the first information comprises at least one of the following:
part or all of description information of the task;
indication information indicating that the accuracy of the first model does not meet the accuracy requirement or has decreased;
first accuracy, wherein the first accuracy is used to indicate accuracy of an inference result of the task obtained by the first model;
recommended operation information; and
waiting time information, wherein the waiting time information is used to indicate a time required for the first network element to resume inference for the task.

24. The method according to claim 23, wherein the recommended operation information comprises at least one of the following operations:
continuing to use inference result data corresponding to the task;
stopping use of the inference result data corresponding to the task; and
re-triggering the task to obtain new inference result data.

25. The method according to claim 21, wherein after the sending a task request message to a first network element, the method further comprises:
receiving, by the second network element from the first network element, inference result data corresponding to the task.

26. The method according to claim 21, wherein the first network element comprises a model inference function network element.

27. The method according to claim 21, wherein the second network element comprises a consumer network function.

28. The method according to claim 22, wherein the fifth network element comprises a model inference function network element.

29. A model accuracy determining apparatus, comprising:
a sending module configured to send a task request message to a first network element, wherein the task request message is used to request to perform inference for a task; and
a receiving module configured to receive first information from the first network element, wherein the first information is used to indicate that accuracy of a first model does not meet an accuracy requirement or has decreased; wherein
the first model is a model used for performing inference for the task, and that the accuracy of the first model does not meet the accuracy requirement or has decreased is determined by the first network element.

30. A network-side device, comprising a processor and a memory, wherein the memory stores a program or instructions capable of running on the processor, and when the program or instructions are executed by the processor, the steps of the model accuracy determining method according to any one of claims 1 to 19 are implemented, or the steps of the model accuracy determining method according to any one of claims 21 to 28 are implemented.

31. A readable storage medium, wherein the readable storage medium stores a program or instructions, and when the program or instructions are executable by a processor, the steps of the model accuracy determining method according to any one of claims 1 to 19 are implemented, or the steps of the model accuracy determining method according to any one of claims 21 to 28 are implemented.
